# EUROPÄISCHE PATENTSCHRIFT

(11) **EP 4 332 025 B1**
(45) Veröffentlichungstag und Bekanntmachung des Hinweises auf die Patenterteilung: **20.08.2025**
(21) Anmeldenummer: 23184924.1
(22) Anmeldetag: 12.07.2023
(51) Int. Cl.: B65G 17/08, B65G 17/46, A01D 61/02, A01D 45/26, B65G 21/18

(54) **VORRICHTUNG ZUM TRANSPORT VON ERNTEGUT**
DEVICE FOR TRANSPORTING HARVESTED GOODS
DISPOSITIF POUR LE TRANSPORT DE PRODUITS DE RÉCOLTE

(30) Priorität: 30.08.2022 DE 202022104881 U
(43) Veröffentlichungstag der Anmeldung: 06.03.2024
(73) Patentinhaber: Zeyer, Andreas, 73450 Neresheim (DE)
(72) Erfinder: Zeyer, Andreas, 73450 Neresheim (DE)
(74) Vertreter: Schmid, Wolfgang

(56) Entgegenhaltungen:
- JP-A- 2000 102 769
- US-B1- 6 234 300
- US-B1- 6 237 750

## Beschreibung

Die Erfindung betrifft eine Vorrichtung zum Transport von Erntegut, insbesondere Gemüse, wie z. B. Salat, Kohl und dergleichen, mit einem von einem Beladebereich zu einem Entladebereich endlos umlaufenden Kurvenband.

Aus der US 6 237 750 B1 ist ein Transportband zum Fördern von Lebensmitteln und ähnlichen Gegenständen entlang einer Spiralbahn bekannt.

Aus dem allgemeinen Stand der Technik sind weitere derartige Vorrichtungen bekannt. Diese sind häufig an Erntefahrzeugen angebracht, die mit vergleichsweise geringer Geschwindigkeit entlang oder über die abzuerntenden Felder geführt werden. Die sich in dem Bereich der Vorrichtung befindenden Erntehelfer*innen ernten das Erntegut und legen es in dem Beladebereich auf das Kurvenband, von wo es zu einer sich meist an dem Fahrzeug befindenden, sich an den Entladebereich anschließenden Verpackungsstation gebracht wird.

Problematisch bei den bekannten Lösungen ist jedoch, dass das Erntegut in Kurven von dem Kurvenband fallen kann, weshalb dieses meist mit sehr geringer Geschwindigkeit betrieben wird. Auch im Bereich von Steigungen kann es bei den bekannten Vorrichtungen zu Problemen kommen, insbesondere wenn das Erntegut eine annähernd runde Form aufweist und nach unten rollt.

Um diese Situation zu verbessern, wurden teilweise Löcher in das Kurvenband eingebracht, in welche das Erntegut eingelegt wird, um sowohl in Kurven als auch in Steigungen an seinem Ort zu verbleiben. Nachteilig dabei ist jedoch, dass die Löcher nur für Erntegut mit einer bestimmten Größe geeignet sind.

Teilweise wurden an den Kurvenbändern auch Becher oder ähnliche Behälter angebracht, in denen dann das Erntegut eingelegt wurde. Diese sind jedoch vergleichsweise aufwändig zu handhaben, da sie zum einen manuell entleert werden müssen und zum anderen durch ihre starre Beabstandung entlang des Kurvenbands schwieriger zu befüllen sind, wodurch es teilweise zu Verzögerungen beim Transport des Ernteguts kommen kann.

Es ist daher Aufgabe der vorliegenden Erfindung, eine Vorrichtung zum Transport von Erntegut zu schaffen, die einfach zu handhaben ist und mit der unterschiedliches Erntegut sehr flexibel und sicher vom Feld zu einer Verpackungsstation oder ähnlichem transportiert werden kann.

Erfindungsgemäß wird diese Aufgabe durch die in Anspruch 1 genannten Merkmale gelöst.

Die erfindungsgemäße Vorrichtung zum Transport von Erntegut weist ein von einem Beladebereich zu einem Entladebereich endlos umlaufendes Kurvenband auf, auf das das Erntegut aufgelegt, um von dem Beladebereich zu dem Entladebereich transportiert zu werden. An dem Kurvenband sind in Laufrichtung desselben eine Vielzahl von Halteelementen in zwei in Querrichtung des Kurvenbands voneinander beabstandeten Reihen angebracht, die zum Halten des Ernteguts auf dem Kurvenband dienen.

Durch die Halteelemente wird ein Verbleiben des Ernteguts auf dem Kurvenband auch in Kurven und bei vergleichsweise höheren Geschwindigkeiten gewährleistet, da die Halteelemente ein Verrutschen des Ernteguts auf dem Kurvenband zuverlässig verhindern.

Dadurch, dass die Halteelemente in zwei voneinander beabstandeten Reihen an dem Kurvenband angebracht sind, ergibt sich zwischen denselben ein Zwischenraum, in den das Erntegut eingelegt werden kann. Die Größe dieses Zwischenraums kann durch entsprechendes Anordnen der Halteelemente über die Breite des Kurvenbands verändert werden, so dass eine Anpassung der Vorrichtung an unterschiedliche Erntegüter möglich ist. Des Weiteren ergibt sich auf diese Weise eine kontinuierlich über die Länge des Kurvenbands verlaufende Möglichkeit zur Positionierung des Ernteguts, so dass im Gegensatz zu bekannten Lösungen keine Abhängigkeit von einer bestimmten Positionierung von Löchern, Bechern oder ähnlichem gegeben ist.

Um eine ausreichende Stabilität und Festigkeit der Halteelemente zu gewährleisten, weisen diese ein aus einem metallischen Material bestehendes, aus dem Kurvenband herausragendes und in Richtung der Außenseiten des Kurvenbands geneigtes Halteteil auf, das den Halteelementen ihre grundsätzliche Stabilität verleiht. Durch die Neigung der Halteelemente in Richtung der Außenseiten des Kurvenbands vergrößert sich der oben erwähnte, zum Einlegen des Ernteguts dienende Zwischenraum, sodass sich für sehr viele Erntegüter eine optimale Halterung mittels der Halteelementen ergibt.

An dem Halteteil ist ein Schutzelement angebracht, das aus einem weicheren Material als das Halteteil besteht. Dadurch wird eine Beschädigung bzw. Verletzung des Ernteguts durch die Halteelemente, insbesondere durch das harte und möglicherweise scharfe Material der Halteteile, vermieden, wodurch eine gleichbleibende Qualität des Ernteguts gewährleistet werden kann.

In einer sehr vorteilhaften Weiterbildung der Erfindung kann vorgesehen sein, dass die Halteteile an ihren von dem Kurvenband abgewandten Enden zur Fixierung der Schutzelemente umgebogen sind. Auf diese Weise ergibt sich eine sehre einfache und dennoch zuverlässige Befestigung des Schutzelements an dem Halteteil, so dass über die gesamte Laufzeit der Vorrichtung gewährleistet ist, dass sich die Halteelemente in einem unversehrten Zustand befinden, insbesondere dass die Schutzelemente an den Halteteilen verbleiben.

Um einerseits eine einfache Befestigung der Halteteile an dem Kurvenband und andererseits eine optimale Anpassung der Halteelemente an das zu transportierende Erntegut zu erreichen, kann des Weiteren vorgesehen sein, dass die Halteteile jeweils einen an dem Kurvenband angebrachten, vertikalen Abschnitt und einen gegenüber dem vertikalen Abschnitt in Richtung der Außenseiten des Kurvenbands abgewinkelten Abschnitt aufweisen.

Wenn in einer weiteren vorteilhaften Ausgestaltung der Erfindung die Halteteile jeweilige Aussparungen aufweisen, mittels welchen sie an in Querrichtung des Kurvenbands verlaufenden Verbindungselementen angebracht sind, so ergibt sich eine sehr einfache Möglichkeit zur Anbringung der Halteteile an dem Kurvenband. Bei den Verbindungselementen kann es sich um Bauteile handeln, die ohnehin an dem Kurvenband vorhanden sind, sodass keine zusätzlichen Bauteile notwendig sind, um die Halteelemente an dem Kurvenband anzubringen.

Diese einfache Anbringung der Halteteile an dem Kurvenband kann noch dadurch vereinfacht werden, dass die Aussparungen sich in den vertikalen Abschnitten der Halteteile befinden.

In einer weiteren vorteilhaften Ausführungsform der Erfindung kann vorgesehen sein, dass die Schutzelemente rohrförmig ausgebildet sind. Dadurch können diese zum einen sehr einfach an den Halteteilen angebracht werden und bieten zum anderen einen vollständigen Schutz für das Erntegut, da sie die Halteteile vollständig umschließen.

Eine sowohl hinsichtlich des Schutzes des Ernteguts als auch der Montierbarkeit der Schutzelemente sehr vorteilhafte Ausführungsform der Schutzelemente ergibt sich, wenn diese aus Kunststoff bestehen. Beispielsweise kann es sich um einen weichen Kunststoff handeln, wie er in ähnlicher Weise auch für Gartenschläuche oder ähnliches eingesetzt wird.

Eine weitere vorteilhafte Ausgestaltung der Erfindung kann darin bestehen, dass die Halteteile jeweilige Abstützelemente aufweisen, mit denen sie an dem Kurvenband abgestützt sind. Dadurch wird ein Kippen und Verbiegen der Halteteile verhindert.

Die oben beschriebenen Vorteile der Halteelemente kommen insbesondere dann zur Geltung, wenn das Kurvenband zwischen dem Beladebereich und dem Entladebereich eine Steigung aufweist. Bei bekannten Lösungen ergeben sich insbesondere im Bereich von Steigungen Schwierigkeiten mit dem Transport des Ernteguts, was durch die erfindungsgemäßen Halteelemente gerade in solchen Steigungsbereichen vermieden wird.

Um eine einfache Weitergabe des Ernteguts an eine Verpackungsstation oder ähnliches zu gewährleisten, kann des Weiteren vorgesehen sein, dass in dem Entladebereich des Kurvenbands wenigstens eine Übergaberolle angeordnet ist.

Dabei kann vorgesehen sein, dass der Durchmesser der wenigstens einen Übergaberolle kleiner ist als die Höhe des Kurvenbands in dem Entladebereich. Auf diese Weise kann ein sehr kleiner Zwischenraum zwischen dem Kurvenband und der Verpackungsstation realisiert werden, so dass eine sichere Übergabe des Ernteguts von dem Kurvenband an die Verpackungsstation gegeben ist.

Die Funktionsweise der erfindungsgemäßen Vorrichtung im Bereich der Übergabe des Ernteguts an eine nachfolgende Verpackungsstation wird verbessert, wenn in einer weiteren vorteilhaften Ausführungsform der Erfindung mehrere Übergaberollen vorgesehen sind, welche in Laufrichtung des Kurvenbands hintereinander angeordnet sind.

Des Weiteren kann ein die Übergaberollen umgebendes Förderband vorgesehen sein, um die Übergabe des Ernteguts an eine nachfolgende Verpackungsstation noch sicherer zu gestalten.

Um eine sichere Bewegung des Kurvenbands zu gewährleisten, kann des Weiteren vorgesehen sein, dass das Kurvenband in zumindest einem Kurvenbereich desselben mittels einer Umlenkeinrichtung geführt ist.

Eine weitere vorteilhafte Ausführungsform der Erfindung kann darin bestehen, dass zumindest in einem Bereich des Kurvenbands oberhalb desselben eine im Wesentlichen mit der Geschwindigkeit des Kurvenbands mitlaufende Halteeinrichtung für das Erntegut vorgesehen ist. Diese sorgt dafür, dass das Erntegut auch im Bereich von Steigungen sicher von dem Kurvenband mitgeführt wird.

Nachfolgend ist ein Ausführungsbeispiel der Erfindung anhand der Zeichnung prinzipmäßig dargestellt.

Es zeigt:
- Fig. 1: eine sehr schematische Draufsicht auf eine erfindungsgemäße Vorrichtung;
- Fig. 2: eine Seitenansicht gemäß dem Pfeil II aus Fig. 1;
- Fig. 3: eine perspektivische Ansicht der erfindungsgemäßen Vorrichtung;
- Fig. 4: eine Seitenansicht der erfindungsgemäßen Vorrichtung;
- Fig. 5: eine Seitenansicht gemäß dem Pfeil V aus Fig. 4;
- Fig. 6: eine vergrößerte Darstellung der erfindungsgemäßen Halteelemente;
- Fig. 7: eine detailliertere Darstellung der erfindungsgemäßen Halteelemente;
- Fig. 8: eine Ansicht der Halteelemente gemäß dem Pfeil VIII aus Fig. 7;
- Fig. 9: eine sehr schematische Draufsicht auf den Entladebereich der erfindungsgemäßen Vorrichtung;
- Fig. 10: eine Seitenansicht gemäß dem Pfeil X aus Fig. 9;
- Fig. 11: eine detailliertere Darstellung des Entladebereichs;
- Fig. 12: eine Ansicht eines Kurvenbereichs der erfindungsgemäßen Vorrichtung; und
- Fig. 13: eine weitere Ansicht eines Kurvenbereichs der erfindungsgemäßen Vorrichtung.

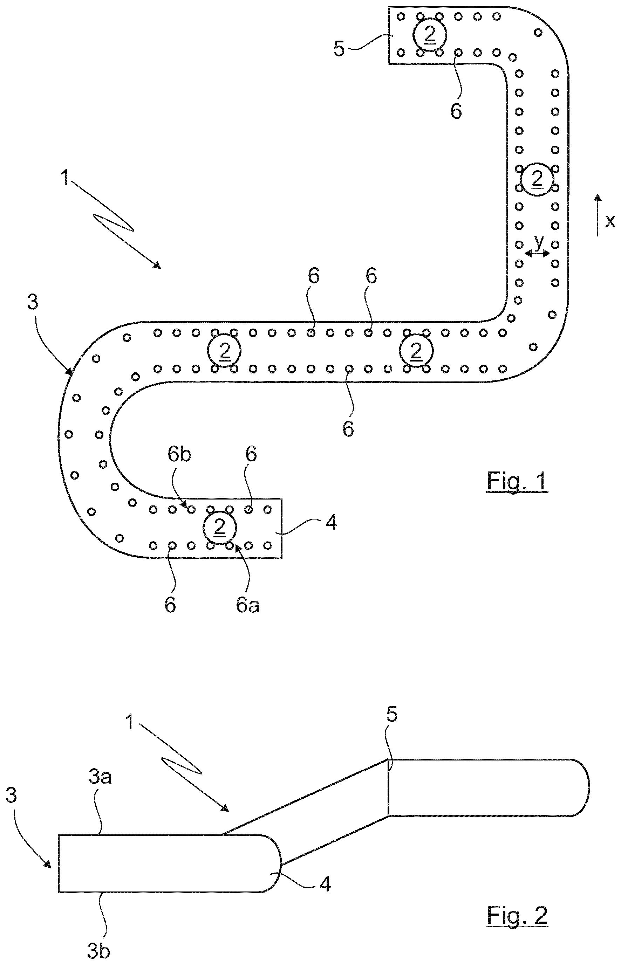

Die Figuren 1 und 2 zeigen auf sehr schematische Weise eine Vorrichtung 1 zum Transport von äußerst schematisch dargestelltem Erntegut 2. Bei dem Erntegut 2 kann es sich zum Beispiel um Gemüse, wie beispielsweise verschiedene Arten von Salat, verschiedene Arten von Kohl, Brokkoli und dergleichen handeln.

Die Vorrichtung 1 weist ein Kurvenband 3 auf, das von einem Beladebereich 4 zu einem Entladebereich 5 endlos umläuft. Das Kurvenband 3 weist demnach einen oberen Bandabschnitt 3a, auf dem sich das Erntegut 2 befindet, und einen unteren Bandabschnitt 3b auf. Durch den Umlauf des Kurvenbands 3 wird der obere Bandabschnitt 3a zu dem unteren Bandabschnitt 3b und umgekehrt. Zum Antrieb des Kurvenbands 3 dient eine in den Figuren nicht dargestellte Antriebseinrichtung, beispielsweise ein Elektromotor.

Der Begriff "Kurvenband" bezieht sich auf ein Förderband, das, wie in Fig. 1 dargestellt, wenigstens eine Kurve aufweist, um die das Band verläuft. Da derartige Kurvenbänder 3 hinsichtlich ihrer Konstruktion und Funktionsweise an sich bekannt sind, wird hierin nicht näher darauf eingegangen.

In der Nähe des Beladebereichs 4 des Kurvenbands 3 befinden sich nicht dargestellte Personen, welche das Erntegut 2 in ebenfalls nicht dargestellter Weise ernten und in dem Beladebereich 4 auf das Kurvenband 3 legen.

In Fig. 2 ist erkennbar, dass das Kurvenband 3 zwischen dem Beladebereich 4 und dem Entladebereich 5 eine Steigung aufweist.

Die Vorrichtung 1 weist des Weiteren eine Vielzahl von Halteelementen 6 auf, die in einer mit "x" bezeichneten Laufrichtung des Kurvenbands 3 in zwei in einer mit "y" bezeichneten Querrichtung des Kurvenbands 3 voneinander beabstandeten Reihen 6a und 6b an dem Kurvenband 3 angebracht sind.

Durch die Halteelemente 6 verbleibt das Erntegut 2 in sämtlichen Situationen, insbesondere auch in Kurven, bei vergleichsweise höheren Geschwindigkeiten sowie im Bereich der Steigung des Kurvenbands 3, an seiner Position, in der es auf dem Kurvenband 3 abgelegt wurde.

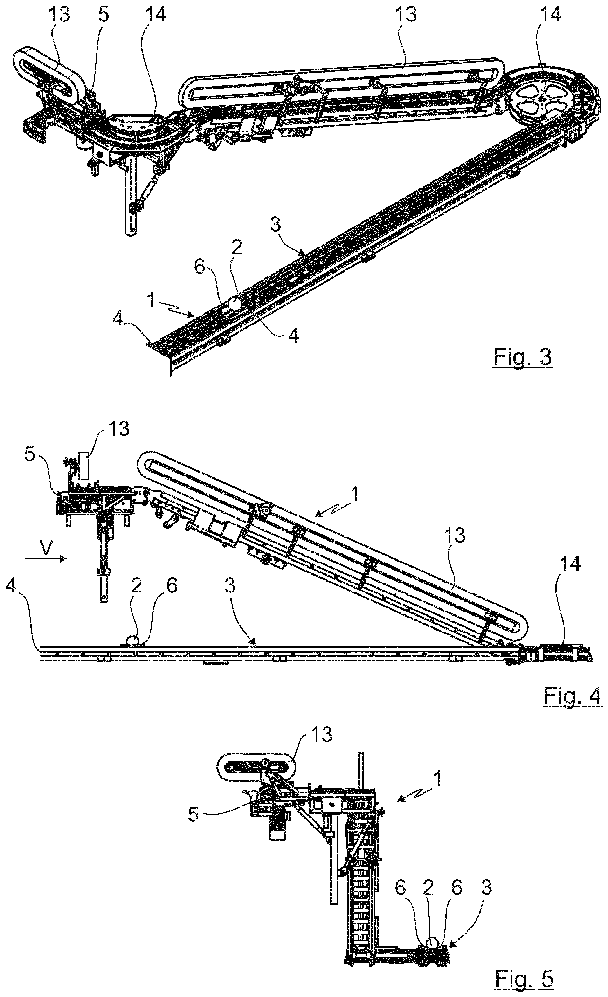

Die Figuren 3, 4 und 5 zeigen weitere Ansichten der Vorrichtung 1 und insbesondere des Kurvenbands 3.

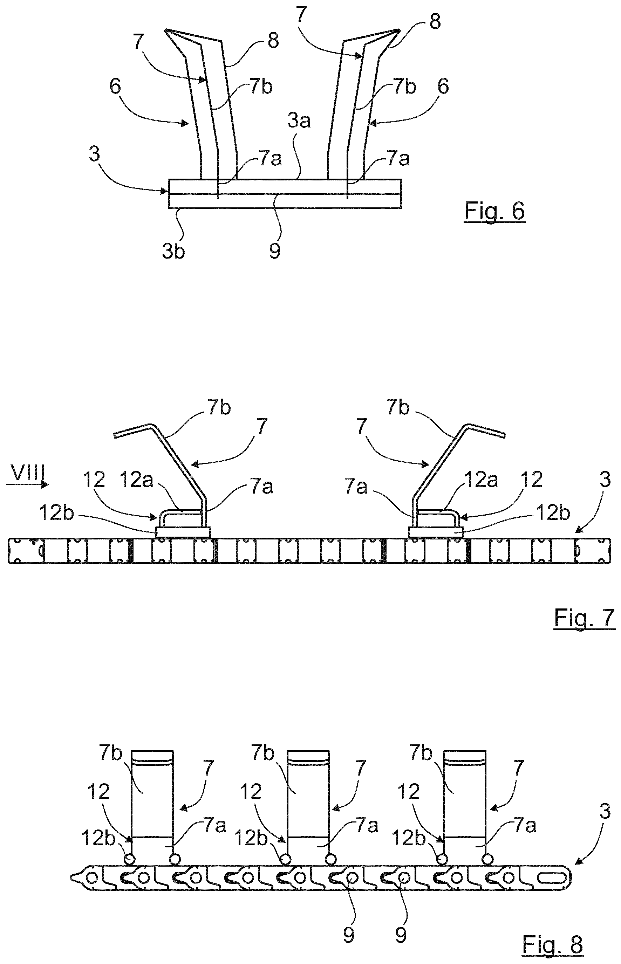

Die Halteelemente 6 weisen jeweils ein Halteteil 7 und ein an dem Halteteil 7 angebrachtes Schutzelement 8 auf. Wie in der vergrößerten Darstellung von Fig. 6 zu erkennen ist, sind die Halteteile 7 jeweils in Richtung der Außenseite des Kurvenbands 3 geneigt und ragen nach oben von dem oberen Bandabschnitt 3a des Kurvenbands 3 heraus. Die Halteteile 7 weisen dazu jeweils einen an dem Kurvenband 3 angebrachten, vertikalen Abschnitt 7a und einen gegenüber dem vertikalen Abschnitt 7a in Richtung der Außenseiten des Kurvenbands 3 abgewinkelten Abschnitt 7b auf. Des Weiteren weisen die Halteteile 7 eine in den Figuren nicht dargestellte, sich jeweils in dem vertikalen Abschnitt 7a der Halteteile 7 befindende Aussparung auf, mittels welcher die Halteteile 7 an in Querrichtung y des Kurvenbands 3 verlaufenden Verbindungselementen 9 des Kurvenbands 3 angebracht sind.

Die Halteteile 7 bestehen vorzugsweise aus einem metallischen Material, insbesondere aus Stahl. Die Halteteile 7 können beispielsweise mittels Laserstrahlschneiden aus einem größeren Blech ausgeschnitten werden. Um das Erntegut 2 vor Beschädigungen durch die Halteteile 7 zu schützen, bestehen die Schutzelemente 8 aus einem weicheren Material als die Halteteile 7. Insbesondere bestehen die Schutzelemente 8 aus Kunststoff.

Die Schutzelemente 8 sind rohrförmig ausgebildet und können so über die Halteteile 7 geschoben werden. Zur Fixierung der Schutzelemente 8 sind die Halteteile 7 an ihren von dem Kurvenband 3 abgewandten Enden umgebogen bzw. abgekantet. Dieses Umbiegen bzw. Abkanten der Halteteile 7 erfolgt vorzugsweise nach dem Aufschieben der Schutzelemente 8 auf die Halteteile 7, wodurch das Aufschieben der Schutzelemente 8 vereinfacht wird.

Die Größe und Form der Halteelemente 6 können an das jeweils zu transportierende Erntegut 2 angepasst werden. Gegebenenfalls lassen sich die Halteelemente 6 auch aus dem Kurvenband 3 entfernen und durch andersartige ersetzen.

In den Figuren 7 und 8 sind die Halteelemente 6 detaillierter dargestellt. Dabei ist erkennbar, dass die Halteteile 7 der Halteelemente 6 jeweilige Abstützelemente 12 aufweisen, mit denen sie an dem Kurvenband 3 abgestützt sind. Die Abstützelemente 12 weisen jeweilige Bügel 12a sowie an den Bügeln 12a angebrachte, im vorliegenden Fall als Stangen mit rundem Querschnitt ausgebildete Anlageelemente 12b auf, die sich auf dem Kurvenband 3 abstützen. Auch die Bügel 12a, die die Verbindung zwischen den Anlageelementen 12b und den Halteelementen 6 herstellen, sind so geformt, dass sie sich auf dem Kurvenband 3 abstützen. Auf diese Weise verteilen die Abstützelemente 12 die durch das Erntegut 2 auf die Halteelemente 6 einwirkenden Kräfte gleichmäßig, verhindern ein Kippen der Halteelemente 6 in sämtlichen Richtungen und sorgen somit für die gewünschte Stabilität derselben.

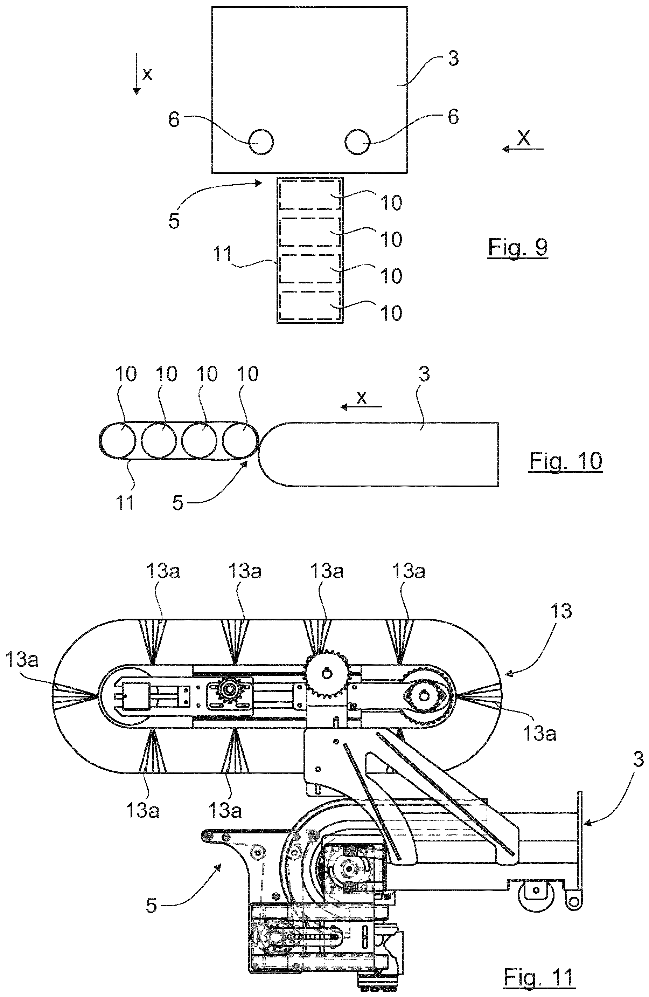

Die Figuren 9 und 10 zeigen den Entladebereich 5 des Kurvenbands 3 in einer vergrößerten Darstellung. In dem Entladebereich 5 des Kurvenbands 3 ist wenigstens eine Übergaberolle 10 angeordnet, die für einen Transport des Ernteguts zu einer nicht dargestellten, sich gegebenenfalls an die Vorrichtung 1 anschließenden Verpackungsstation dient. Wie in der Draufsicht von Fig. 9 und auch in der Seitenansicht von Fig. 10 erkennbar ist, sind im vorliegenden Fall mehrere Übergaberollen 10 vorgesehen, die in Laufrichtung x des Kurvenbands 3 hintereinander angeordnet sind.

Die Übergaberollen 10 sind im vorliegenden Fall von einem Förderband 11 umgeben, auf welches das Erntegut 2 von dem Kurvenband 3 übergeben wird. Dabei können eine oder mehrere Übergaberollen 10 oder das Förderband 11 selbst angetrieben sein um eine entsprechende Bewegung des Förderbandes zu erzeugen, die für den Transport des Ernteguts von dem Kurvenband 3 zu der Verpackungsstation sorgt. Die Breite der Übergaberollen 10 und des Förderbands 11 ist vorzugsweise geringer als der Abstand der Halteelemente 6 zueinander, sodass eine Kollision der Halteelemente 6 mit den Übergaberollen 10 bzw. mit dem Förderband 11 vermieden werden kann.

Aus der Seitenansicht von Fig. 10 geht hervor, dass der Durchmesser der wenigstens einen Übergaberolle 10 bzw. sämtlicher Übergaberollen 10 kleiner ist als die Höhe des Kurvenbands 3, d.h. der Abstand zwischen dem oberen Bandabschnitt 3a und dem unteren Bandabschnitt 3b, in dem Entladebereich 5.

Durch den beschriebenen Aufbau des Kurvenbands 3 in dem Entladebereich 5 lässt sich gegebenenfalls eine Wascheinrichtung unterhalb des Kurvenbands 3 anordnen, um das Erntegut 2 zu waschen.

Fig. 11 zeigt eine detailliertere Darstellung des Entladebereichs 5. Dabei ist erkennbar, dass zumindest in einem Bereich des Kurvenbands 3 oberhalb desselben eine Halteeinrichtung 13 für das Erntegut 2 vorgesehen ist. Die Halteeinrichtung 13 weist ein umlaufendes Förderband 13a, das im Wesentlichen mit der Geschwindigkeit des Kurvenbands 3 mitläuft, und eine Vielzahl von an dem umlaufenden Förderband 13a angebrachte Bürsten 13b auf. Die Bürsten 13a sind in einem derartigen Abstand von dem Kurvenband 3 angeordnet, dass sie das Erntegut 2 von oben halten, ohne dasselbe zu beschädigen. Auf diese Weise wird eine sichere Übergabe des Ernteguts 2 in dem Entladebereich gewährleistet.

Wie in den Figuren 3 und 4 zu erkennen ist, ist auch in dem Bereich der Steigung des Kurvenbands 3 eine Halteeinrichtung 13 angeordnet, die wesentlich länger ist als die in dem Entladebereich 5 angeordnete und in Fig. 11 dargestellte Halteeinrichtung 13. Auch die in dem Bereich der Steigung des Kurvenbands 3 angeordnete Halteeinrichtung 13 weist das im Wesentlichen mit der Geschwindigkeit des Kurvenbands 3 umlaufende Förderband 13a und die an demselben angebrachten Bürsten 13b auf, die in den Figuren jedoch nicht explizit dargestellt sind.

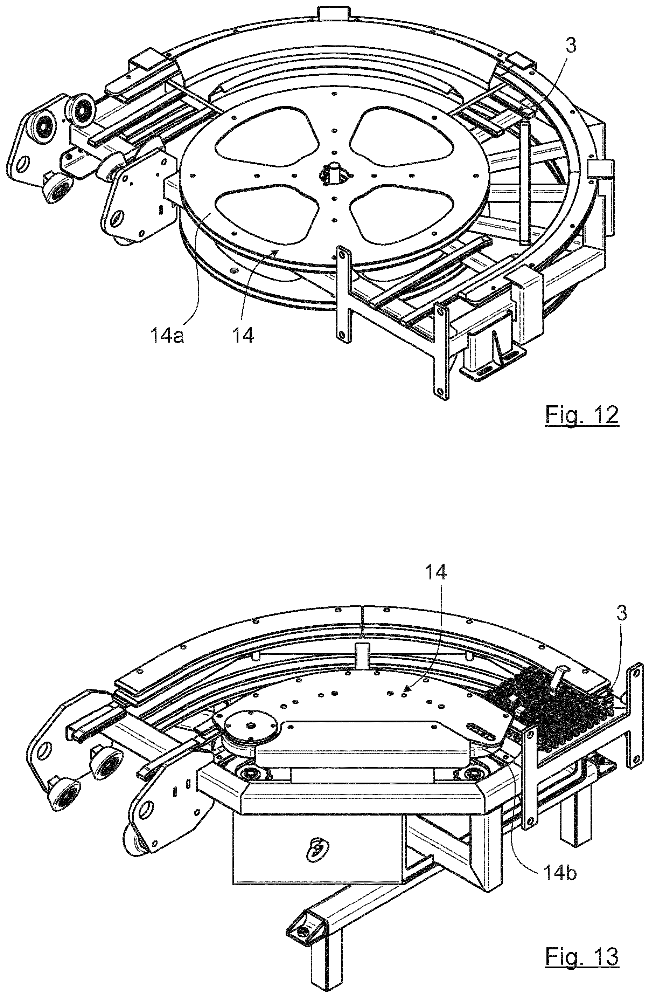

In den Figuren 12 und 13 sind zwei Ausführungsformen einer Umlenkeinrichtung 14 dargestellt, mit denen das Kurvenband 3 in zumindest einem Kurvenbereich desselben geführt ist. Die beiden Umlenkeinrichtungen 14 sind auch in den Figuren 3 und 4 zu erkennen. Die in Fig. 12 dargestellte Umlenkeinrichtung 14 weist eine beispielsweise mittels eines nicht dargestellten Wälzlagers gelagerte Platte 14a auf, an deren Umfang das Kurvenband 3 anliegt und die sich mit der Bewegung des Kurvenbands 3 mitdreht. Dagegen weist die in Fig. 13 dargestellte Umlenkeinrichtung 14 eine Kette 14b auf, an der das Kurvenband 3 ebenfalls anliegt, wodurch siech die Kette 14b mit der Bewegung des Kurvenbands 3 mitbewegt. Gegebenenfalls wäre es möglich, sowohl die Platte 14a als auch die Kette 14b anzutreiben, was bei den dargestellten Ausführungsformen jedoch nicht der Fall ist.

## Patentansprüche

1. Vorrichtung (1) zum Transport von Erntegut (2), insbesondere Gemüse, wie beispielsweise Salat, Kohl und dergleichen, mit einem von einem Beladebereich (4) zu einem Entladebereich (5) endlos umlaufenden Kurvenband (3), und mit einer Vielzahl von Halteelementen (6), die in Laufrichtung (x) des Kurvenbands (3) in zwei in Querrichtung (y) des Kurvenbands (3) voneinander beabstandeten Reihen (6a, 6b) an dem Kurvenband (3) angebracht sind, **dadurch gekennzeichnet, dass** die Halteelemente (6) jeweils ein aus einem metallischen Material bestehendes, in Richtung der Außenseiten des Kurvenbands (3) geneigt aus dem Kurvenband (3) herausragendes Halteteil (7) und ein an dem Halteteil (7) angebrachtes, aus einem weicheren Material als das Halteteil (7) bestehendes Schutzelement (8) aufweisen.

2. Vorrichtung nach Anspruch 1,
**dadurch gekennzeichnet, dass**
die Halteteile (7) an ihren von dem Kurvenband (3) abgewandten Enden zur Fixierung der Schutzelemente (8) umgebogen sind.

3. Vorrichtung nach Anspruch 1 oder 2,
**dadurch gekennzeichnet, dass**
die Halteteile (7) jeweils einen an dem Kurvenband (3) angebrachten, vertikalen Abschnitt (7a) und einen gegenüber dem vertikalen Abschnitt (7a) in Richtung der Außenseiten des Kurvenbands (3) abgewinkelten Abschnitt (7b) aufweisen.

4. Vorrichtung nach Anspruch 1, 2 oder 3,
**dadurch gekennzeichnet, dass**
die Halteteile (7) jeweilige Aussparungen aufweisen, mittels welchen sie an in Querrichtung (y) des Kurvenbands (3) verlaufenden Verbindungselementen (9) angebracht sind.

5. Vorrichtung nach den Ansprüchen 3 und 4,
**dadurch gekennzeichnet, dass**
die Aussparungen sich in den vertikalen Abschnitten (7a) der Halteteile (7) befinden.

6. Vorrichtung nach einem der Ansprüche 2 bis 5,
**dadurch gekennzeichnet, dass**
die Schutzelemente (8) rohrförmig ausgebildet sind.

7. Vorrichtung nach einem der Ansprüche 2 bis 6,
**dadurch gekennzeichnet, dass**
die Schutzelemente (8) aus Kunststoff bestehen.

8. Vorrichtung nach einem der Ansprüche 1 bis 7,
**dadurch gekennzeichnet, dass**
die Halteteile (7) jeweilige Abstützelemente (12) aufweisen, mit denen sie an dem Kurvenband (3) abgestützt sind.

9. Vorrichtung nach einem der Ansprüche 1 bis 8,
**dadurch gekennzeichnet , dass**
das Kurvenband (3) zwischen dem Beladebereich (4) und dem Entladebereich (5) eine Steigung aufweist.

10. Vorrichtung nach einem der Ansprüche 1 bis 9,
**dadurch gekennzeichnet, dass**
in dem Entladebereich (5) des Kurvenbands (3) wenigstens eine Übergaberolle (10) angeordnet ist.

11. Vorrichtung nach Anspruch 10,
**dadurch gekennzeichnet, dass**
der Durchmesser der wenigstens einen Übergaberolle (10) kleiner ist als die Höhe des Kurvenbands (3) in dem Entladebereich (5).

12. Vorrichtung nach Anspruch 10 oder 11,
**dadurch gekennzeichnet, dass**
mehrere Übergaberollen (10) vorgesehen sind, welche in Laufrichtung (x) des Kurvenbands (3) hintereinander angeordnet sind.

13. Vorrichtung nach Anspruch 12,
**gekennzeichnet durch**
ein die Übergaberollen (10) umgebendes Förderband (11).

14. Vorrichtung nach einem der Ansprüche 1 bis 13,
**dadurch gekennzeichnet, dass**
das Kurvenband (3) in zumindest einem Kurvenbereich desselben mittels einer Umlenkeinrichtung (14) geführt ist.

15. Vorrichtung nach einem der Ansprüche 1 bis 14,
**dadurch gekennzeichnet, dass**
zumindest in einem Bereich des Kurvenbands (3) oberhalb desselben eine im Wesentlichen mit der Geschwindigkeit des Kurvenbands (3) mitlaufende Halteeinrichtung (13) für das Erntegut (2) vorgesehen ist.

## Claims

1. Apparatus (1) for transporting harvested goods (2), in particular vegetables such as lettuce, cabbage and the like, comprising a curved belt (3) running continuously from a loading area (4) to an unloading area (5), and a plurality of retaining elements (6) which are mounted on the curved belt (3) in the direction of travel (x) of the curved belt (3) in two rows (6a, 6b) spaced apart from each other in the transverse direction (y) of the curved belt (3), **characterised in that** that the retaining elements (6) each comprise a retaining part (7) made of a metallic material and projecting from the curved belt (3) at an angle towards the outer sides of the curved belt (3), and a protective element (8) attached to the retaining part (7) and made of a softer material than the retaining part (7).

2. Apparatus according to claim 1,
**characterised in that**
the retaining parts (7) are bent at their ends facing away from the curved belt (3) in order to fix the protective elements (8) in place.

3. Apparatus according to claim 1 or 2,
**characterised in that**
the retaining parts (7) each have a vertical section (7a) attached to the curved belt (3) and a section (7b) angled away from the vertical section (7a) towards the outer sides of the curved belt (3).

4. Apparatus according to claim 1, 2 or 3,
**characterised in that**
the retaining parts (7) have respective recesses by means of which they are attached to connecting elements (9) extending in the transverse direction (y) of the curved belt (3).

5. Apparatus according to claims 3 and 4,
**characterised in that**
the recesses are located in the vertical sections (7a) of the retaining parts (7).

6. Apparatus according to one of claims 2 to 5,
**characterised in that**
the protective elements (8) are tubular.

7. Apparatus according to one of claims 2 to 6,
**characterised in that**
the protective elements (8) are made of plastic.

8. Apparatus according to one of claims 1 to 7,
**characterised in that**
the retaining parts (7) have respective support elements (12) by means of which they are supported on the curved belt (3).

9. Apparatus according to one of claims 1 to 8,
**characterised in that**
the curved belt (3) has an incline between the loading area (4) and the unloading area (5).

10. Apparatus according to one of claims 1 to 9,
**characterised in that**
at least one transfer roller (10) is arranged in the unloading area (5) of the curved belt (3).

11. Apparatus according to claim 10,
**characterised in that**
the diameter of the at least one transfer roller (10) is smaller than the height of the curved belt (3) in the unloading area (5).

12. Apparatus according to claim 10 or 11,
**characterised in that**
a plurality of transfer rollers (10) are provided, which are arranged one behind the other in the direction of travel (x) of the curved belt (3).

13. Apparatus according to claim 12,
**characterised by**
a conveyor belt (11) surrounding the transfer rollers (10).

14. Apparatus according to one of claims 1 to 13,
**characterised in that**
the curved belt (3) is guided in at least one curved section thereof by means of a deflection means (14).

15. Apparatus according to any of claims 1 to 14,
**characterised in that**
at least in one area of the curved belt (3) above the same, a holding device (13) for the harvested goods (2) is provided, which essentially runs at the same speed as the curved belt (3).

## Revendications

1. Dispositif (1) destiné au transport de produits de récolte (2), en particulier des légumes tels que par exemple de la laitue, du chou et similaire, comprenant une bande courbée (3) rotative sans fin depuis une zone de chargement (4) jusqu'à une zone de déchargement (5) et comprenant une pluralité d'éléments de retenue (6), qui sont appliqués au niveau de la bande courbée (3) dans la direction de déplacement (x) de la bande courbée (3) en deux rangées (6a, 6b) distantes l'une de l'autre dans la direction transversale (y) de la bande courbée (3), **caractérisé en ce que** les éléments de retenue (6) présentent respectivement une partie de retenue (7) constituée d'un matériau métallique, inclinée dans la direction des côtés extérieurs de la bande courbée (3) et qui fait saillie de la bande courbée (3) et un élément de protection (8) appliqué au niveau de la partie de retenue (7) et constitué d'un matériau plus souple que la partie de retenue (7).

2. Dispositif selon la revendication 1, **caractérisé en ce que** les parties de retenue (7) sont recourbées au niveau de leurs extrémités opposées à la bande courbée (3) pour la fixation des éléments de protection (8).

3. Dispositif selon la revendication 1 ou 2, **caractérisé en ce que** les parties de retenue (7) présentent respectivement une section verticale (7a) appliquée au niveau de la bande courbée (3) et une section (7b) inclinée par rapport à la section verticale (7a) dans la direction des côtés extérieurs de la bande courbée (3).

4. Dispositif selon la revendication 1, 2 ou 3, **caractérisé en ce que** les parties de retenue (7) présentent des évidements respectifs à l'aide desquels elles sont appliquées au niveau des éléments de liaison (9) qui s'étendent dans la direction transversale (y) de la bande courbée (3).

5. Dispositif selon les revendications 3 et 4, **caractérisé en ce que** les évidements se trouvent dans les sections verticales (7a) des parties de retenue (7).

6. Dispositif selon l'une des revendications 2 à 5, **caractérisé en ce que** les éléments de protection (8) sont réalisés de manière tubulaire.

7. Dispositif selon l'une des revendications 2 à 6, **caractérisé en ce que** les éléments de protection (8) sont constitués de matière plastique.

8. Dispositif selon l'une des revendications 1 à 7, **caractérisé en ce que** les parties de retenue (7) présentent des éléments d'appui respectifs (12) avec lesquels elles s'appuient au niveau de la bande courbée (3).

9. Dispositif selon l'une des revendications 1 à 8, **caractérisé en ce que** la bande courbée (3) présente une pente entre la zone de chargement (4) et la zone de déchargement (5).

10. Dispositif selon l'une des revendications 1 à 9, **caractérisé en ce que** dans la zone de déchargement (5) de la bande courbée (3) est disposé au moins un rouleau de transfert (10).

11. Dispositif selon la revendication 10, **caractérisé en ce que** le diamètre de l'au moins un rouleau de transfert (10) est inférieur à la hauteur de la bande courbée (3) dans la zone de déchargement (5).

12. Dispositif selon la revendication 10 ou 11, **caractérisé en ce que** plusieurs rouleaux de transfert (10) sont prévus et sont disposés les uns derrière les autres dans la direction de déplacement (x) de la bande courbée (3).

13. Dispositif selon la revendication 12, **caractérisé par** une bande transporteuse (11) entourant les rouleaux de transfert (10).

14. Dispositif selon l'une des revendications 1 à 13, **caractérisé en ce que** la bande courbée (3) est guidée dans au moins une zone courbée de celle-ci à l'aide d'un moyen de déviation (14).

15. Dispositif selon l'une des revendications 1 à 14, **caractérisé en ce qu'** au moins dans une zone de la bande courbée (3) au-dessus de celle-ci est prévu pour les produits de récolte (2) un moyen de retenue (13) qui fonctionne sensiblement à la vitesse de la bande courbée (3).
